# EUROPEAN PATENT APPLICATION

(11) **EP 2 166 064 A1**
(43) Date of publication of application: **24.03.2010**
(21) Application number: 08016585.5
(22) Date of filing: 19.09.2008
(51) Int. Cl.: C10J 3/00, F01K 23/06, C10K 3/04

(54) **A chemical product providing system and method for providing a chemical product**

(71) Applicant: Siemens Aktiengesellschaft, 80333 München (DE)
(72) Inventor: Metz, Thomas, Dr., 09599 Freiberg (DE); Wolf, Erik, 91341 Röttenbach (DE)

(57) **Abstract**

A chemical product (M) providing system is disclosed, which comprises an electrolyser (2) and a gasification unit (5), whereas the gasification unit (5) is fed with oxygen (B), resulted from the electrolyser (2), to produce a synthesis gas (J) by the gasification unit (5), the synthesis gas (J) being a source material for the chemical product (M). Additionally also a method for providing a chemical product (M) is disclosed.

## Description

The present invention relates to a chemical product providing system and method for providing a chemical product.

Renewable energy is in the focus to reduce CO₂ emissions and to reduce the reliance on other primary energy sources. Renewable energy can replace a significant amount of the existing conventional power plants, like coal-fired power plants. The drawback of this source is that it is not always available with the needed power output and that it has a limited controllability. This is especially true for wind turbines.

The feed in of renewable energy depends on the availability of the source itself and also of the remaining capacity of the power grid.

To reduce CO₂ emissions and to become independent of fossil fuels the contributions of renewable energy need to be maximized. This means that it is necessary to deal with fluctuation and stochastic energy sources. In order to achieve that, an overcapacity of renewable energy generation may be necessary. Alternatively, to allow access to energy at times of high demand, a storage of energy would help to timely decouple the energy generation and the energy consumption. When supply does not match the demand the energy can be provided by discharging the storage.

There are many different ways to store electrical energy. Electrical energy can be stored electro-chemically in batteries, physically, for example in form of pressure or potential energy. Potential energy is especially stored in a pumped hydro storage or in a compressed air energy storage (CAES).

Pumped hydro storage systems can be used to store access energy. Access in electrical energy may be used to pump water to a storage at a higher elevation. The stored potential energy of the water can later be used for electrical power generation in a water turbine. The CAES uses the compression energy of compressed air in an expansion process. Based on the CAES type natural gas is needed to compensate the thermal losses of the compression process.

There is also the possibility to store pure hydrogen which then, when needed, will be fed to some processes which will generate finally a fuel or a gas to be processed in a power generator. In these processes a lot of times oxygen needs to be fed, which possibly need to be extracted via cryogenic decomposition of air, these processes themselves need a lot of energy to reduce the temperature of the air to allow condensation of gaseous components of the air to extract oxygen from the liquefied gas.

Therefore, it is a first objective of the present invention to provide a system for providing a chemical product - particularly a synthesised fuel, which will be processed in a power generator -, so that in the system less energy for creating such a chemical product or synthesised fuel will be consumed. It is a second objective of the present invention to provide a method for providing such a chemical product, particularly a synthesised fuel to generate electrical power.

The first objective is solved by a chemical product providing system with the features as claimed in claim 1. The second objective is solved by a method for providing a chemical product as claimed in claim 13. Besides, the depending claims define further advantageous developments of the invention.

The invention relates to a chemical product providing system. As chemical product especially synthesised fuel is considered, as fuel any combustible substance should be understood, especially liquids or gases, that could be used for electrical or mechanical power generation once combusted. The chemical product providing system comprises an electrolyser for generating hydrogen and oxygen by water cracking and a gasification unit, whereas the gasification unit is fed with oxygen, resulted from the electrolyser, to produce a synthesis gas by the gasification unit, the synthesis gas being a source material for the chemical product.

With the inventive chemical product providing system, a byproduct during the generation of hydrogen in the electrolyser
- the oxygen - which typically would be discharged and not used, will be used in a later processing step in the gasification unit. This allows to dispense with the extraction of oxygen from air to generate oxygen for the gasification unit, the oxygen being extracted from air, or at least to reduce the share of oxygen generation by such a process. This is advantageous because the extraction of oxygen from air by an air separating unit, e.g. by extraction via cryogenic decomposition of air, needs a lot of energy itself. In case of the cryogenic decomposition of air, a vast amount of energy is needed to reduce the temperature of the air to allow condensation of gaseous components of the air to extract oxygen from the liquefied gas.
   Therefore the invention can increase the overall effectiveness of a power generating system and can reduce the cost and complexity to synthesise fuel or to produce the chemical product.
   Additionally the invention is advantageous, because oxygen, which would occur anyhow during electrolysing, can be further used. This is specifically true, if the electrolyser used for the chemical product providing system may be the electrolyser as an integral unit of an energy storage system. In such an energy storage system, the electrolyser may be employed for generating a storagable chemical compound - e.g. pure hydrogen -, this chemical compound being used, when needed, for energy generation.
   In an advantageous embodiment, in the chemical product providing system the synthesis gas may, especially when subsequently processed, be fed to a product synthesis unit, the product synthesis unit producing the chemical product. The chemical product may be synthesised fuel being provided for an electrical power generator. The chemical product may also be ammonia, ethanol, or a further chemical compound that can later be processed in further chemical processes, not related to power generation.
   Focusing of synthesised fuel as the chemical product, the subsequent processing and the product synthesis may perform mainly chemical or mechanical operations, so that the eventual composition of the synthesised fuel will be optimised for combustion.
   The synthesised fuel can be seen as an energy carrying product, which in some form stores energy. Especially in a form, that can free the energy by combustion of the synthesised fuel.
   In a further embodiment the gasification unit may be set up like this, so that the produced synthesis gas may be comprised of essentially two thirds of carbon monoxide and essentially one third of hydrogen. To reach this, the appropriate amount of oxygen is fed to the gasification unit, depending also on the fuel - e.g. coal, petroleum oil, petroleum gas, biomass, heavy oil, residues from refinery, or waste, especially organic waste - which is also fed to the gasification unit.
   As fuel in this case a very broad interpretation should be considered, independently of the state of the fuel - gaseous, liquid, or solid. It merely may be a substance that is combustible.
   Further, the synthesis gas may fed to a water gas shift reactor, in which carbon monoxide - mainly as an integral component of the synthetic gas - reacts with water - particularly pure water with the chemical formula H₂0 - in a chemical reaction to form carbon dioxide and hydrogen. The water for the reaction may also be a mixture of water and alcohol or some other kind of mixture or chemical solution.
   In yet another embodiment, the hydrogen produced by the water gas shift reactor and/or stored hydrogen produced by the electrolyser and the synthesis gas may be fed to a carbon to hydrogen ratio adjustment unit to change the ratio of carbon and hydrogen within the synthesis gas, leading to a modified synthesis gas with modified carbon and hydrogen ratio. The modified carbon and hydrogen ratio may be optimised for a later eventual combustion, after a possible further processing to a combustible product. The mentioned carbon may also be present in form of carbon dioxide and/or carbon monoxide.
   Therefore, in a further embodiment, the modified synthesis gas and the hydrogen produced by the water gas shift reactor and/or stored hydrogen produced by the electrolyser may be fed to the product synthesis unit, e.g. to finally generate the synthesised fuel as a combustible product.
   This synthesised fuel may be composed of one of the following synthetic liquid fuel, synthetic natural gas, and gas or liquid comprising hydrocarbon molecules, and may be generated by the product synthesis unit e.g. by executing the so called Fischer-Tropsch synthesis process.
   For generating electrical power - for example to be fed to the power grid -, the synthesised fuel may be fed to a combustor of a electrical power generator for combustion hydrocarbon molecules to generate electrical power, the electrical power generator could be particularly a steam- and / or combustion turbine or an internal combustion engine.
   Besides, the invention is directed to a method for providing a chemical product, particularly a synthesised fuel to generate electrical power, the method comprising: feeding oxygen, resulted from an electrolyser - especially the electrolyser of an energy storage system, the electrolyser being employed for generating a storagable chemical compound for energy generation -, to a gasification unit; and producing a synthesis gas by the gasification unit, the synthesis gas being a source material for the chemical product. Generally, the inventive method has the same advantages as the inventive energy storage system has.
   Even though one focus of the previous paragraphs was synthesised fuel as the chemical product, also all kinds of chemical products may be possible output material of the chemical product providing system, especially non-combustible products that may be preliminary chemical products that can be used in a chemical plant as a basis for further processing. As an example, these preliminary chemical products may be ammonia or ethanol.
   Further features, properties and advantages of the present invention will be come clear from the following description of embodiments in conjunction with the accompanying drawings. The described features are advantages alone and in combination with each other.

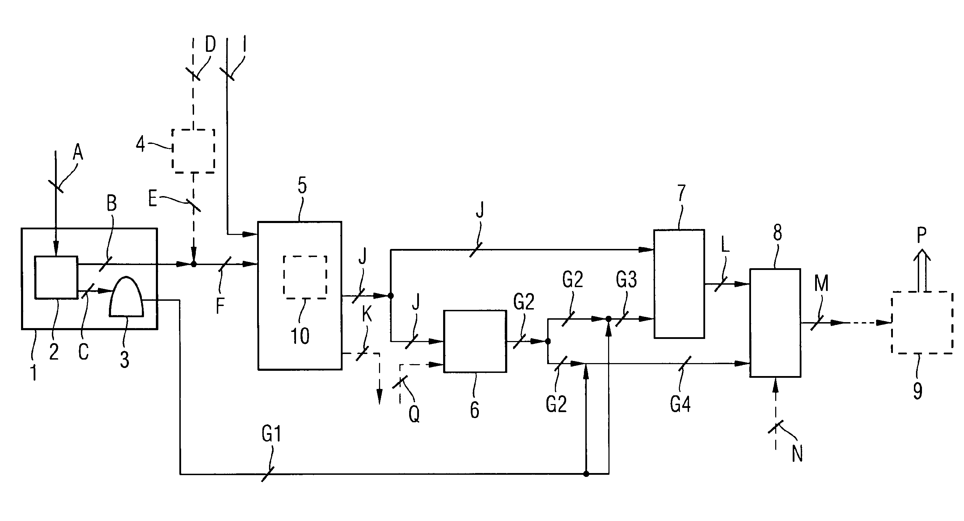

   - Fig. 1: schematically shows an inventive chemical product providing system.

A first embodiment of the present invention will now be described with reference to Figure 1. Figure 1 schematically shows an inventive chemical product providing system, specifically a synthesised fuel providing system. Within the figure, processing units will be shown as rectangles. Streams of solid state materials, liquids, or gases will be indicated by arrows between these units, with reference signs denoting the material composition of the streams. The arrows indicate the direction of the streams.

In an abstract view, the chemical product providing system, especially if the chemical product is synthesised fuel, has several input materials - like water, fuel, air with its gaseous components and/or oxygen - and output materials - like synthesis gas which directly could be used for combustion as fuel gas, as preliminary product to synthesise fuel and/or chemical products in subsequent process steps, byproducts like slag ash or carbon dioxide. Besides, mechanical and/or electrical energy may be added for the generation of synthesised fuel, whereas, in an eventual power generation step, mechanical or electrical energy may be generated.

The power generation step may be executed, by combusting a chemical product M as synthesised fuel within a power generator e.g. a turbine 9, which is generating power P. The product M may be a liquid fuel, a synthetic gas, or some other kind of combustible material. For the conversion of energy, also directly the output of a later to be introduced gasification unit 5 could be used. But using a further processed product M may be advantageous in that respect, that product M may be optimised for storage or transportation, being especially liquid or solid.

The product M will be produced by a product synthesis unit 8, which converts a modified synthetic gas L by optionally adding hydrogen G4 (chemical formula: H₂). The hydrogen G4 may by a product generated by a later to be discussed process executed by a shift reactor 6, which also operates as a hydrogen separator. The hydrogen created by the shift reactor 6 will be called according to FIG. 1 hydrogen G2. Additionally hydrogen may also be taken from a hydrogen storage 3, which then will be called hydrogen G1.

Hydrogen C to be stored in the hydrogen storage 3 will be produced from water A - possibly pure water with the chemical formula H₂O - by an electrolyser 2 within a hydrogen energy storage and production unit 1. In general, in chemistry and manufacturing, electrolysis is a method of separating chemically bonded elements and compounds by passing an electric current through them. In the present case, the electrolyser 2 is separating water A, so that two water molecules H₂O will result in two hydrogen molecules H₂ - reference sign C - and one oxygen molecule O₂ - reference sign B.

The two hydrogen molecules H₂ will be stored as an energy carrier within the hydrogen storage 3. This hydrogen storage 3 can already be part of an energy storage system, which is not further discussed in the present application. The stored hydrogen can then generally be used for powering electric motors and combustion engines. Specifically it is used in the present invention to modify the chemical composition of a synthetic gas to create an optimised product - the product M - for combustion or alternatively chemical products for the chemical industry e.g. such as ethanol.

Not part of the present embodiment but being in the scope of the present invention, besides synthesised fuel as product M also ethanol, ammonia, or other chemical products can be synthesised usable as chemical pre-products to be utilised in processing steps of the chemical industry. For this, also slight modifications of the present system may be necessary, e.g. adding nitrogen N - N being a reference sign in the figure and also the chemical element symbol - as an input to the product synthesis unit 8 for an ammonia synthesis.

To generalise, the product synthesis unit 8 is set up to produce more complex chemical compounds compared to its input stream, the modified synthetic gas L.

The oxygen B produced in the mentioned energy storage system is not needed in that system. But it will not be simply discarded and treated as exhaust gas. The oxygen B will be passed as oxygen F to a gasification unit 5, possibly by feeding further optional oxygen E to the oxygen B if the needs for oxygen by the gasification unit 5 do not match the supplied oxygen B from the electrolyser 2. The oxygen E may be created by an optional air separation unit 4, separating oxygen from surrounding air D, e.g. by a cryogenic processing, so that oxygen may be separated from the air D. Due to the fact that the cryogenic processing will consume a lot of energy mainly to reduce the temperature of the air, the system advantageously will be controlled that way, that no or only little of the additional oxygen E will be necessary. Thus, the air separation unit 4 may not be necessary, which in consequence, if the air separation unit 4 will not be comprised in the system, less energy will be consumed, no complex and costly air separation unit 4 need to be built, and the overall degree of efficiency of system may rise by reduced costs.

The need for the oxygen F may vary in its amount depending upon which type feedstock I may be processed in the gasification unit 5 to produce a synthetic gas J. Gasification is a process that converts carbonaceous materials, such as coal, petroleum, or biomass, refinery residuals, waste, slurries, or combinations of these, into gaseous form, the synthesis gas mainly consisting out of carbon dioxide, carbon monoxide, hydrogen, methan, nitrogen and steam by reacting the raw material - the feedstock I - at high temperatures with a controlled amount of oxygen - the oxygen F - and/or steam. The resulting gas mixture is the synthesis or synthetic gas J - or "syngas" - and is itself a fuel.

Syngas may be burned directly in combustion engines, or converted - as in the present embodiment - via product synthesis processes, e.g. the Fischer-Tropsch process, into synthetic fuel or chemical products - the product-stream M. Gasification can also begin with materials that are not otherwise useful fuels, such as biomass or organic waste. In addition, the high-temperature combustion refines out corrosive ash elements such as chloride and potassium, allowing clean gas production from otherwise problematic fuels. This is indicated in figure 1 by the dashed arrow leaving the gasification unit 5 dispensing slag ash K.

One of the main components of the synthetic gas J will be carbon monoxide with the chemical formula CO.

If necessary, an optional gas purification unit 10 may be incorporated into the gasification unit 5. This may be employed to separate unwanted contamination or particles and dispose these compounds also like the slag ash K. Unwanted contamination may be components being an integral part of the feedstock I, like sulphur or like heavy metals.

Ideally, the generated synthetic gas J may only be comprised of the elements carbon, oxygen, and hydrogen.

The synthetic gas J will be fed partly directly to a carbon-to-hydrogen ratio adjustment unit 7 and to the shift reactor 6. In the shift reactor 6 the synthetic gas J will be modified by using water Q (H₂O) to generate carbon dioxide and hydrogen - the hydrogen G2. This produced hydrogen G2 will be fed - possibly supported by the hydrogen G1 taken from the hydrogen storage 3, resulting in hydrogen G3 - to the carbon-to-hydrogen ratio adjustment unit 7, allowing to modify the ratio of carbon and hydrogen within the synthetic gas J, thus turning out to the modified synthetic gas L.

Possibly the shift reactor 6 may also be omitted in the system, in case that it is preferred to only consume the hydrogen G1 from the hydrogen storage 3.

As already mentioned, the modified synthetic gas L and optionally the hydrogen G4 - the latter may not be necessary if the carbon-to-hydrogen ratio adjustment unit 7 already provided the wanted ratio of carbon and hydrogen - will be fed to the product synthesis unit 8 to generate the product M.

Product M can be combustible to generate mechanical or electrical power or a product for the chemical industry such as enthanol or ammonica or others. The optional hydrogen G4 may be taken as the hydrogen G1 from the hydrogen storage 3 or as the hydrogen G2 as a product of the shift reactor 6.

The invention allows using the generated oxygen B and the generated hydrogen G1 from the electrolyser 2, permitting to supersede process steps that separately generate oxygen or hydrogen. Ideally, the invention can advantageously be combined with an energy storage system comprising such an electrolyser, such a hydrogen gas storage and a power plant. In such a system the hydrogen gas storage may be connected to the power plant. Advantageously the electrolyser is a high pressure electrolyser.

With that, instead of using a storage medium of low specific energy density a high energy density medium, i.e. hydrogen and preferably compressed hydrogen, may be used. This allows designing for a very compact high power and high capacity storage. The inventive energy storage system provides a reliable energy supply in spite of a source that feeds in stochastically and indeterminably.

Preferably the energy storage system comprises a hydrogen compressor which is connected to the electrolyser and to the hydrogen gas storage. The hydrogen coming from the electrolyser can be compressed by means of the hydrogen compressor before it is stored in the hydrogen gas storage.

The power plant may preferably comprise a combination of a turbine and a generator. It can especially comprise a conventional power plant for reconversion of chemical energy, for example of hydrogen, to electrical energy.

Large energy storage systems will avoid turning down or even shutting-off renewable energy generation in case of low demand as it happens when generation management needs to be applied. The introduction of a high pressure electrolyser improves significantly the system efficiency and power density in contrast to systems which would not use one.

The embodiment of figure 1 is particularly advantageous in the respect, that the system can be operated, that less energy will be consumed by the shift reactor 6, the gasification unit 5, and by the air separation unit 4. This is advantageous, because these components typically consume a lot of energy during operation. The shift reactor 6 and/or the air separation unit 4 may even become superfluous and need not be operated at all - at least temporarily. Thus this enables a higher product stream, a simplified system and lower costs.

Additionally the embodiment allows that oxygen needs not to be produced internally within the gasification unit 5, e.g. internally produced by an air separation unit. The same is true for hydrogen with respect to the carbon-to-hydrogen ratio adjustment unit 7. Due to that, these units can be technically simplified, also allowing to reduce the investment. This permits building smaller system, whereas previously only large system could be operated profitably. This is particularly important for using biomass as fuel for the gasification unit 5 for which centralised large systems have the drawback that transportation of biomass is very costly, but shows similar positive effects if fuels like coal, crude oil, natural gas, heavy fuel oil, or refinery residues are used for the gasification.

Further, the embodiment is advantageous in the respect that hydrogen need not to be produced internally within the different units but can be taken from the hydrogen storage 3. This hydrogen can be used to increase the ratio of hydrogen of the synthetic gas and/or of the preliminary products in a product synthesis process, e.g. Fischer-Tropsch-process. Generation of hydrogen from the synthetic gas - by the unit with reference sign 6 - to provide hydrogen to the remaining synthetic gas may not be necessary. Therefore the amount of synthetic gas is not reduced by a process to isolate or generate hydrogen and consequently the product output increases.

By taking the hydrogen as a product from the electrolyser, also purification of hydrogen, e.g. via pressure swing absorption (PSA), may not be necessary.

The invention is especially advantageous if an energy storage system supporting a fuel gasification system is providing oxygen and/or hydrogen by an electrolyser, which anyhow would be present for the energy storage system to generate the to be stored energetic product - e.g. hydrogen. This allows using the oxygen for the fuel gasification process which is provided by the energy storage system. Besides, a fraction of the hydrogen produced in the energy storage may be used within the fuel gasification process to increase the product output.

Additionally the product output may be increased and system complexity may be reduced for the overall system. This furthermore enables to built smaller systems optimising its economic value, especially if biomass is used as a feedstock.

## Claims

1. A chemical product (M) providing system,
**characterised in that** it comprises an electrolyser (2) and a gasification unit (5), whereas the gasification unit (5) is fed with oxygen (B), resulted from the electrolyser (2), to produce a synthesis gas (J) by the gasification unit (5), the synthesis gas (J) being a source material for the chemical product (M).

2. A chemical product (M) providing system as claimed in claim 1,
**characterised in that** the chemical product (M) is a synthesised fuel.

3. A chemical product (M) providing system according to one of the preceding claims,
**characterised in that** the synthesis gas (J), subsequently processed, is fed to a product synthesis unit (8), the product synthesis unit (8) producing the chemical product (M), the chemical product (M) being provided for an electrical power generator (9) or a chemical plant.

4. A chemical product (M) providing system according to one of the preceding claims,
**characterised in that** a primary fuel (I), fed to the gasification unit (5), is at least one of the following:
- coal,
- petroleum oil,
- petroleum gas,
- biomass,
- heavy oil,
- residues from refinery,
- waste, especially organic waste,
- slurries.

5. A chemical product (M) providing system according to one of the preceding claims,
**characterised in that** the synthesis gas (J) is fed to a water gas shift reactor (6), in which carbon monoxide reacts with water (Q) in a chemical reaction to form carbon dioxide and hydrogen (G2).

6. A chemical product (M) providing system according to one of the preceding claims,
**characterised in that** the hydrogen (G2) produced by the water gas shift reactor (6) and/or stored hydrogen (G1) produced by the electrolyser (2) and the synthesis gas (J) is fed to a carbon to hydrogen ratio adjustment unit (7) to change the ratio of carbon and hydrogen (G3) within the synthesis gas (J), leading to a modified synthesis gas (L) with modified carbon and hydrogen ratio.

7. A chemical product (M) providing system according to one of the preceding claims,
**characterised in that** the modified synthesis gas (L) and the hydrogen (G2) produced by the water gas shift reactor (6) and/or stored hydrogen (G1) produced by the electrolyser (2) is fed to the product synthesis unit (8), the product synthesis unit (8) creating a complex chemical compound.

8. A chemical product (M) providing system according to one of the preceding claims,
**characterised in that** the product synthesis unit (8) executing the Fischer-Tropsch synthesis process, an ammonia synthesis, or an ethanol synthesis.

9. A chemical product (M) providing system according to one of the preceding claims,
**characterised in that** the chemical product (M) being composed of one of the following:
- synthetic liquid fuel,
- synthetic natural gas,
- gas or liquid comprising hydrocarbon molecules,
- chemical preliminary products for further chemical processing.

10. A chemical product (M) providing system according to one of the preceding claims,
**characterised in that** the chemical product (M) is fed to a combustor of a electrical power generator (9) for combustion hydrocarbon molecules to generate electrical power (P), the electrical power generator (9) being particularly a gas and/or steam turbine.

11. A chemical product (M) providing system according to one of the preceding claims,
**characterised in that** the chemical product (M) providing system comprises a hydrogen gas storage (3) for storing hydrogen (C), resulted from the electrolyser (2).

12. A chemical product (M) providing system according to one of the preceding claims,
**characterised in that** the chemical product (M) providing system utilising the electrolyser (2) of an energy storage system, the electrolyser (2) employed for generating a storagable chemical compound for energy generation.

13. Method for providing a chemical product (M) particularly to generate electrical power, comprising:
- feeding oxygen (B), resulted from an electrolyser (2), to a gasification unit (5);
- producing a synthesis gas (J) by the gasification unit (5), the synthesis gas (J) being a source material for the chemical product (M).
